# FASCICULE DE BREVET EUROPEEN

(11) **EP 4 173 961 B1**
(45) Date de publication et mention de la délivrance du brevet: **31.07.2024**
(21) Numéro de dépôt: 22199453.6
(22) Date de dépôt: 04.10.2022
(51) Int. Cl.: B64D 29/02, B64C 7/02, B64D 33/02

(54) **NACELLE D AÉRONEF COMPRENANT UNE LIAISON ENTRE DES CONDUITS COMPORTANT DES COLLERETTES ORIENTÉES VERS L' INTÉRIEUR ET AÉRONEF COMPRENANT AU MOINS UNE TELLE NACELLE**
FLUGZEUGGONDEL MIT EINER VERBINDUNG ZWISCHEN DURCHGÄNGEN MIT NACH INNEN GERICHTETEN FLANSCHEN UND FLUGZEUG MIT MINDESTENS EINER SOLCHEN GONDEL
AIRCRAFT NACELLE COMPRISING A LINK BETWEEN DUCTS COMPRISING INWARD-FACING FLANGES AND AIRCRAFT COMPRISING AT LEAST ONE SUCH NACELLE

(30) Priorité: 26.10.2021 FR 2111370
(43) Date de publication de la demande: 03.05.2023
(73) Titulaire: AIRBUS OPERATIONS (S.A.S.), 31060 Toulouse (FR)
(72) Inventeur: CZAPLA, Lionel, TOULOUSE (FR); PIARD, Frédéric, 31060 TOULOUSE (FR)
(74) Mandataire: Fantin, Laurent

(56) Documents cités:
- WO-A2-2010/001009
- FR-A1- 2 978 731
- FR-A1- 3 057 545
- US-A1- 2020 002 016

## Description

La présente demande se rapporte à une nacelle d'aéronef comprenant une liaison entre des conduits comportant des collerettes orientées vers l'intérieur ainsi qu'à un aéronef comprenant au moins une telle nacelle.

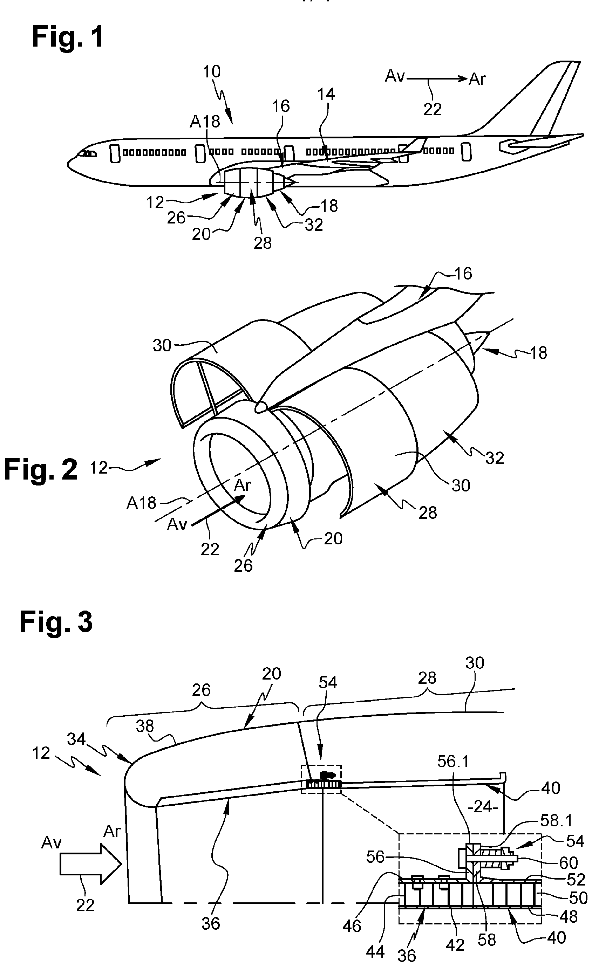

Selon un mode de réalisation visible sur la figure 1, un aéronef 10 comprend plusieurs ensembles de propulsion 12 positionnés sous les ailes 14 de l'aéronef 10 et reliés à ces dernières par des mâts 16. Chaque ensemble de propulsion 12 comprend un turboréacteur 18 positionné à l'intérieur d'une nacelle 20.

Pour la suite de la description, une direction longitudinale est parallèle à l'axe moteur A18 du turboréacteur 18 et une direction radiale est perpendiculaire à l'axe moteur A18. Un plan transversal est un plan perpendiculaire à l'axe moteur A18. Les notions avant/arrière, notées Av/Ar, font référence au sens d'écoulement d'un flux d'air 22 dans la nacelle 20, ce flux d'air 22 s'écoulant de l'avant (Av) vers l'arrière (Ar).

La nacelle 20 a une forme approximativement tubulaire et délimite avec le turboréacteur 18 un conduit annulaire 24. Elle comprend, de l'avant vers l'arrière, une partie avant formant une entrée d'air 26 via laquelle pénètre le flux d'air 22, une partie intermédiaire 28 comprenant des capots 30 (visible sur la figure 2) ainsi qu'une partie arrière 32 via laquelle sort le flux d'air 22 et pourvue généralement d'un système d'inversion de poussée.

Selon un mode de réalisation visible sur la figure 3, l'entrée d'air 26 comprend une lèvre 34, un premier conduit 36 prolongeant la lèvre 34 vers l'intérieur de la nacelle 20 ainsi qu'une paroi extérieure 38 prolongeant la lèvre 34 vers l'extérieur de la nacelle 20 jusqu'aux capots 30.

Le turboréacteur 18 comprend une soufflante. En parallèle, la partie intermédiaire 28 comprend un deuxième conduit 40, appelé fan case, formant un carter de rétention configuré pour retenir les morceaux de pales en cas de bris de pales, le deuxième conduit 40 prolongeant le premier conduit 36.

Selon un mode de réalisation visible sur la figure 3, le premier conduit 36 est délimité par des panneaux acoustiques juxtaposés sur toute sa circonférence. Chaque panneau acoustique comprend, selon la direction radiale, en s'écartant de l'axe moteur A18, une première couche acoustiquement résistive 42, au moins une première structure alvéolaire 44 ainsi qu'une première couche réflectrice 46. De la même manière, le deuxième conduit 40 est délimité par des panneaux acoustiques qui comprennent chacun, selon la direction radiale, en s'écartant de l'axe moteur A18, une deuxième couche acoustiquement résistive 48, au moins une deuxième structure alvéolaire 50 ainsi qu'une deuxième couche réflectrice 52.

La nacelle 20 comprend une liaison 54 reliant les premier et deuxième conduits 36, 40 comportant une première collerette 56 solidaire de la première couche réflectrice 46, une deuxième collerette 58 solidaire de la deuxième couche réflectrice 52, plaquée contre la première collerette 56, ainsi que des éléments de liaison 60 maintenant les première et deuxième collerettes 56, 58 plaquées l'une contre l'autre.

Les première et deuxième collerettes 56, 58 sont orientées vers l'extérieur et comprennent des bords libres 56.1, 58.1 présentant des diamètres supérieurs à ceux des première et deuxième couches réflectrices 46, 52.

Ce mode de réalisation n'est pas satisfaisant car il est nécessaire de prévoir des capots 30 mobiles au niveau de la partie intermédiaire 28 de la nacelle 20 pour accéder aux éléments de liaison 60 depuis l'extérieur de la nacelle 20, en soulevant les capots 30.

Le document FR 2978731 divulgue un ensemble propulsif d'aéronef comprenant une nacelle avec une motorisation, ladite nacelle comportant à l'avant une entrée d'air (prolongée par un conduit intérieur permettant de canaliser un flux d'air en direction de la motorisation, ladite motorisation comportant un premier conduit dans le prolongement du conduit de l'entrée d'air, au droit d'une soufflante, avec des moyens pour absorber par déformation une énergie produite lors d'un choc en raison du bris d'une pale de la soufflante, l'ensemble comprenant, au niveau de la zone de jonction entre le conduit intérieur de l'entrée d'air et le conduit de la motorisation, un anneau (de renfort relié à l'entrée d'air et/ou la motorisation avec un orifice et un bord périphérique extérieur concentrique avec l'orifice.

Le document FR3057545 propose une liaison entre les premier et deuxième conduits 36, 40 comportant des éléments de liaison orientés radialement. Chacun d'eux présente un écrou non accessible et bloqué ainsi qu'une vis se vissant depuis l'intérieur de la nacelle. Selon ce document, au moins un panneau acoustique délimitant le premier ou deuxième conduit 36, 40 comprend un évidement pour loger la tête de la vis de chaque élément de liaison ainsi qu'au moins un bouchon relié au panneau acoustique et affleurant la couche acoustiquement résistive 42, 48 dudit panneau acoustique.

Cette solution est relativement complexe à mettre en oeuvre.

La présente invention vise à remédier à tout ou partie des inconvénients de l'art antérieur. A cet effet, l'invention a pour objet une nacelle d'aéronef comprenant des premier et deuxième conduits présentant des premier et deuxième axes parallèles à une direction longitudinale, le premier conduit comportant, selon une direction radiale, au moins une première couche acoustiquement résistive, au moins une première structure alvéolaire ainsi qu'une première couche réflectrice, le deuxième conduit comportant, selon une direction radiale, au moins une deuxième couche acoustiquement résistive, au moins une deuxième structure alvéolaire ainsi qu'une deuxième couche réflectrice, les premier et deuxième conduits présentant des surfaces aérodynamiques et étant reliés par une liaison qui comprend :
- une première collerette positionnée dans un plan perpendiculaire à la direction longitudinale, présentant un premier bord libre et un deuxième bord relié à la première couche réflectrice du premier conduit,
- une deuxième collerette positionnée dans un plan perpendiculaire à la direction longitudinale, plaquée contre la première collerette, présentant un premier bord libre et un deuxième bord relié à la deuxième couche réflectrice du deuxième conduit,
- des éléments de liaison orientés parallèlement à la direction longitudinale, traversant les première et deuxième collerettes et les maintenant plaquées l'une contre l'autre.

Selon l'invention, pour chacun des premier et deuxième conduits, le premier bord libre de la première ou deuxième collerette présente un diamètre inférieur à celui de son deuxième bord. En complément, les premier et deuxième conduits sont configurés pour former au moins un logement débouchant au niveau des surfaces aérodynamiques et dans lequel sont positionnés les première et deuxième collerettes ainsi que les éléments de liaison. La liaison comprend également au moins un bouchon configuré pour obturer le logement, relié au premier ou deuxième conduit et présentant une surface affleurant les surfaces aérodynamiques des premier et deuxième conduits.

Cette solution permet d'obtenir une liaison simple avec des éléments de liaison accessibles depuis l'intérieur des premier et deuxième conduits. Ainsi, lorsque le premier conduit est relié à une entrée d'air d'une nacelle, cette dernière peut être assemblée ou démontée sans qu'il soit nécessaire de prévoir des capots mobiles au niveau de la paroi extérieure de la nacelle pour accéder aux éléments de liaison.

Selon une autre caractéristique, pour chacun des premier et deuxième conduits, la première ou deuxième structure alvéolaire est espacée de la première ou deuxième collerette.

Selon une autre caractéristique, pour chacun des premier et deuxième conduits, la première ou deuxième couche réflectrice comprend un premier ou deuxième prolongement cylindrique, orienté vers l'arrière ou vers l'avant, relié à la première ou deuxième collerette.

Selon une autre caractéristique, la première couche réflectrice comprend un premier prolongement orienté vers l'arrière, présentant un premier tronçon tronconique s'évasant vers l'arrière, relié à la première couche réflectrice, ainsi qu'un deuxième tronçon cylindrique reliant le premier tronçon tronconique et la première collerette. En parallèle, la deuxième couche réflectrice comprend un deuxième prolongement orienté vers l'avant, présentant un premier tronçon tronconique s'évasant vers l'avant, relié à la deuxième couche réflectrice, ainsi qu'un deuxième tronçon cylindrique reliant le premier tronçon tronconique et la deuxième collerette.

Selon une autre caractéristique, le bouchon comprend une paroi qui présente une première face affleurant les surfaces aérodynamiques, une deuxième face opposée à la première face, un bord avant faiblement espacé de la première couche acoustiquement résistive du premier conduit et/ou un bord arrière faiblement espacé de la deuxième couche acoustiquement résistive du deuxième conduit.

Selon une autre caractéristique, la première couche acoustiquement résistive du premier conduit comprend une extension arrière décalée par rapport à la surface aérodynamique du premier conduit contre laquelle est plaquée et fixée la paroi du bouchon.

Selon une autre caractéristique, la deuxième couche acoustiquement résistive du deuxième conduit comprend une extension avant décalée par rapport à la surface aérodynamique du deuxième conduit contre laquelle est plaquée et fixée la paroi du bouchon.

Selon une autre caractéristique, la liaison comprend une première attache en Z qui présente une première aile fixée à la première ou deuxième couche réflectrice du premier ou deuxième conduit ainsi qu'une deuxième aile décalée par rapport à la surface aérodynamique du premier ou deuxième conduit contre laquelle est plaquée et fixée la paroi du bouchon. Selon une autre caractéristique, la liaison comprend une deuxième attache en L qui présente une première aile reliée à la première ou deuxième collerette ainsi qu'une deuxième aile décalée par rapport à la surface aérodynamique du premier ou deuxième conduit contre laquelle est plaquée et fixée la paroi du bouchon.

Selon une autre caractéristique, le bouchon comprend une couche réflectrice et au moins une structure alvéolaire rapportée contre la deuxième face de la paroi du bouchon et intercalée entre ladite paroi et ladite couche réflectrice, ladite paroi étant poreuse et acoustiquement résistive au moins au droit de la structure alvéolaire.

L'invention a également pour objet un aéronef comprenant au moins une nacelle selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue en perspective d'une nacelle comportant des capots en position ouverte,
- La figure 3 est une coupe longitudinale d'une partie d'une nacelle illustrant un mode de réalisation de l'art antérieur,
- La figure 4 est une vue en perspective d'une nacelle illustrant un mode de réalisation de l'invention,
- La figure 5 est une coupe longitudinale d'une partie d'une nacelle illustrant un mode de réalisation de l'invention,
- La figure 6 est une coupe longitudinale d'une liaison reliant des premier et deuxième conduits d'une nacelle illustrant un mode de réalisation de l'invention,
- La figure 7 est une coupe longitudinale d'une liaison reliant des premier et deuxième conduits d'une nacelle illustrant un autre mode de réalisation de l'invention,
- La figure 8 est une vue de face d'une partie de la liaison visible sur la figure 7,
- La figure 9 est une coupe longitudinale d'une liaison reliant des premier et deuxième conduits d'une nacelle illustrant un autre mode de réalisation de l'invention,
- La figure 10 est une coupe longitudinale d'une liaison reliant des premier et deuxième conduits d'une nacelle illustrant un autre mode de réalisation de l'invention,
- La figure 11 est une coupe longitudinale d'une liaison reliant des premier et deuxième conduits d'une nacelle illustrant un autre mode de réalisation de l'invention, et
- La figure 12 est une coupe longitudinale d'une liaison reliant des premier et deuxième conduits d'une nacelle illustrant un autre mode de réalisation de l'invention.

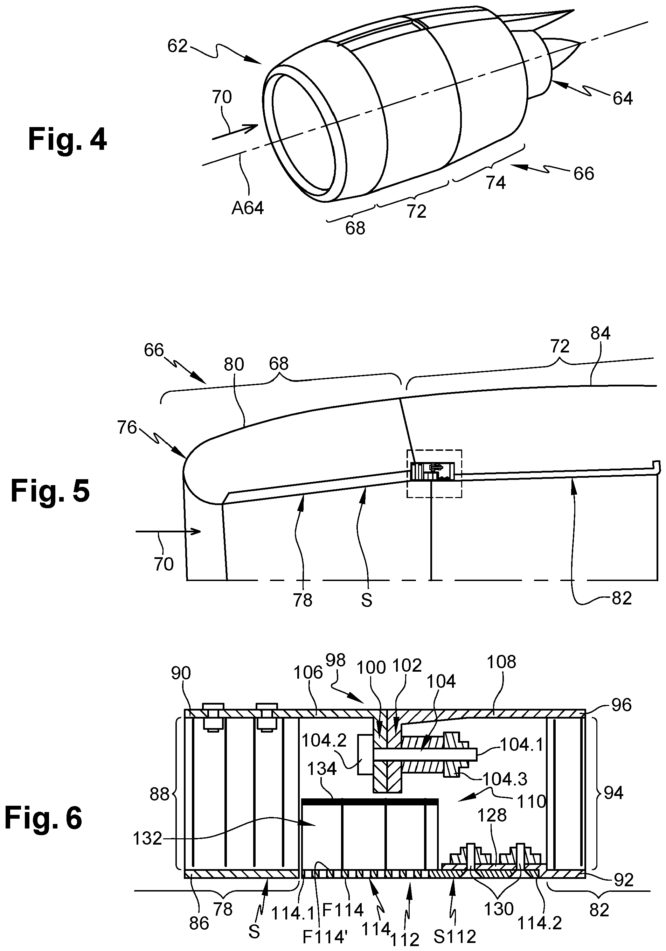

Selon un mode de réalisation visible sur la figure 4, un ensemble de propulsion 62 comprend un turboréacteur 64 présentant un axe moteur A64, parallèle à la direction longitudinale et positionné à l'intérieur d'une nacelle 66. Cette dernière comprend, de l'avant vers l'arrière, une partie avant formant une entrée d'air 68 via laquelle pénètre un flux d'air 70, une partie intermédiaire 72 ainsi qu'une partie arrière 74 via laquelle sort le flux d'air 70.

La partie arrière 74 peut comprendre un système d'inversion de poussée.

Selon un mode de réalisation visible sur la figure 5, l'entrée d'air 68 comprend une lèvre 76, un premier conduit 78 prolongeant la lèvre 76 vers l'intérieur de la nacelle 66 ainsi qu'une paroi extérieure 80 prolongeant la lèvre 76 vers l'extérieur de la nacelle 66. Le premier conduit 78 est configuré pour canaliser le flux d'air 70 en direction du turboréacteur 64 et présente un premier axe parallèle à la direction longitudinale ainsi qu'une surface aérodynamique S contre laquelle s'écoule le flux d'air 70.

La partie intermédiaire 72 comprend, à l'intérieur, un deuxième conduit 82, appelé fan case, prolongeant le premier conduit 78 et formant un carter de rétention configuré pour retenir des morceaux de pales en cas de bris de pales. La partie intermédiaire 72 comprend, à l'extérieur, un carénage 84 positionné dans le prolongement de la paroi extérieure 80. Contrairement à l'art antérieur, ce carénage 84 peut être fixe et ne pas comprendre de capot. Le deuxième conduit 82 présente un deuxième axe parallèle à la direction longitudinale et une surface aérodynamique contre laquelle s'écoule le flux d'air 70.

Le premier conduit 78 est délimité par au moins un panneau acoustique et comprend, selon la direction radiale, en s'écartant de l'axe moteur A64, une première couche acoustiquement résistive 86, au moins une première structure alvéolaire 88 et une première couche réflectrice 90. De la même manière, le deuxième conduit 82 est délimité par au moins un panneau acoustique et comprend, selon la direction radiale, en s'écartant de l'axe moteur A64, une deuxième couche acoustiquement résistive 92, au moins une deuxième structure alvéolaire 94 et une deuxième couche réflectrice 96.

Les première et deuxième couches acoustiquement résistives 86, 92 présentent des surfaces en contact avec le flux d'air 70 qui forment les surfaces aérodynamiques S des premier et deuxième conduits 78, 82.

La nacelle 66 comprend une liaison 98 reliant les premier et deuxième conduits 78, 82 comportant une première collerette 100 solidaire de la première couche réflectrice 90, une deuxième collerette 102 solidaire de la deuxième couche réflectrice 96, plaquée contre la première collerette 100, ainsi que des éléments de liaison 104 traversant les première et deuxième collerettes 100, 102 et les maintenant plaquées l'une contre l'autre.

Les première et deuxième collerettes 100, 102 sont positionnées dans des plans transversaux (perpendiculaires à l'axe moteur A64). Les éléments de liaison 104 sont répartis sur la circonférence des première et deuxième collerettes 100, 102 et orientés parallèlement à la direction longitudinale (parallèle à l'axe moteur A64). Chaque élément de liaison 104 comprend une tige cylindrique 104.1 présentant un axe parallèle à la direction longitudinale, une première butée 104.2 (comme une tête d'une vis par exemple) à une première extrémité de la tige cylindrique 104.1 ainsi qu'une deuxième butée 104.3 (comme un écrou par exemple) à une deuxième extrémité de la tige cylindrique 104.1. Les éléments de liaison 104 ne sont pas plus décrits car ils peuvent être identiques à ceux de l'art antérieur.

La première collerette 100 comprend un premier bord libre 100.1 ainsi qu'un deuxième bord 100.2 relié à la première couche réflectrice 90. Le premier bord libre 100.1 présente un diamètre inférieur à celui du deuxième bord 100.2. Ainsi, la première collerette 100 est dite intérieure et orientée vers l'axe moteur A64. De la même manière, la deuxième collerette 102 comprend un premier bord libre 102.1 ainsi qu'un deuxième bord 102.2 relié à la deuxième couche réflectrice 96. Le premier bord libre 102.1 présente un diamètre inférieur à celui du deuxième bord 102.2. Ainsi, la deuxième collerette 102 est dite intérieure et orientée vers l'axe moteur A64.

Selon une configuration, les premiers bords libres 100.1, 102.1 des première et deuxième collerettes 100, 102 ont le même diamètre. Les deuxièmes bords 100.2, 102.2 des première et deuxième collerettes 100, 102 ont également le même diamètre.

Selon cet agencement, les éléments de liaison 104 sont accessibles depuis l'intérieur des premier et deuxième conduits 78, 82.

Selon une configuration, la première collerette 100 est espacée de la première structure alvéolaire 88 pour permettre d'accéder à la première ou deuxième butée 104.2, 104.3 des éléments de liaison 104. En parallèle, la deuxième collerette 102 est espacée de la deuxième structure alvéolaire 94 pour permettre d'accéder à la première ou deuxième butée 104.2, 104.3 des éléments de liaison 104.

Selon des modes de réalisation visibles sur les figures 6, 9 et 11, la première couche réflectrice 90 comprend un premier prolongement 106 cylindrique, orienté vers l'arrière, relié à la première collerette 100. En parallèle, la deuxième couche réflectrice 96 comprend un deuxième prolongement 108 cylindrique, orienté vers l'avant, relié à la deuxième collerette 102.

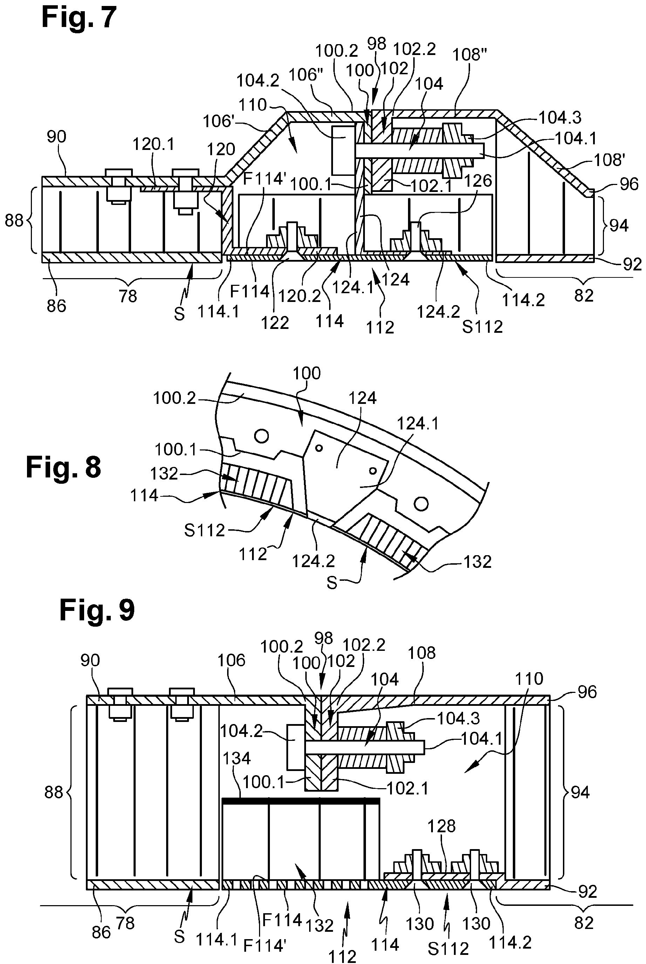

Selon des modes de réalisation visibles sur les figures 7, 10 et 12, la première couche réflectrice 90 comprend un premier prolongement orienté vers l'arrière, présentant un premier tronçon tronconique 106' s'évasant vers l'arrière, relié à la première couche réflectrice 90, ainsi qu'un deuxième tronçon cylindrique 106" reliant le premier tronçon tronconique 106' et la première collerette 100. En parallèle, la deuxième couche réflectrice 96 comprend un deuxième prolongement orienté vers l'avant, présentant un premier tronçon tronconique 108' s'évasant vers l'avant, relié à la deuxième couche réflectrice 96, ainsi qu'un deuxième tronçon cylindrique 108" reliant le premier tronçon tronconique 108' et la deuxième collerette 102. En présence de tronçons tronconiques, comme illustré sur les figures 7, 10 et 12, les première et deuxième collerettes 100 et 102 sont plus écartées de la surface aérodynamique S que dans les modes de réalisation visibles sur les figures 6, 9 et 11.

Quel que soit le mode de réalisation, les premier et deuxième conduits 78, 82 sont configurés pour former au moins un logement 110 débouchant au niveau des surfaces aérodynamiques S, et dans lequel sont positionnés les première et deuxième collerettes 100, 102 ainsi que les éléments de liaison 104. Ce logement 110 s'étend sur toute la circonférence des premier et deuxième conduits 78, 82.

La liaison 98 comprend au moins un bouchon 112 configuré pour obturer le logement 110, relié au premier ou deuxième conduit 78, 82 et présentant une surface S112 affleurant la surface aérodynamique S des premier et deuxième conduits 78, 82.

Le bouchon 112 comprend une paroi 114 courbe, suivant la courbure des premier et deuxième conduits 78, 82. Cette paroi 114 présente une première face F114 orientée vers l'axe moteur A64, correspondant à la surface S112 du bouchon 112 affleurant les surfaces aérodynamiques S, ainsi qu'une deuxième face F114' opposée à la première face F114. Cette paroi 114 comprend un bord avant 114.1 faiblement espacé de la première couche acoustiquement résistive 86 du premier conduit 78 et/ou un bord arrière 114.2 faiblement espacé de la deuxième couche acoustiquement résistive 92 du deuxième conduit 82. On considère que deux éléments sont faiblement espacés si la distance les séparant est inférieure à 20 mm et de préférence inférieure à 10 mm.

Selon des modes de réalisation visibles sur les figures 7, 11 et 12, le bouchon 112 est relié au premier conduit 78.

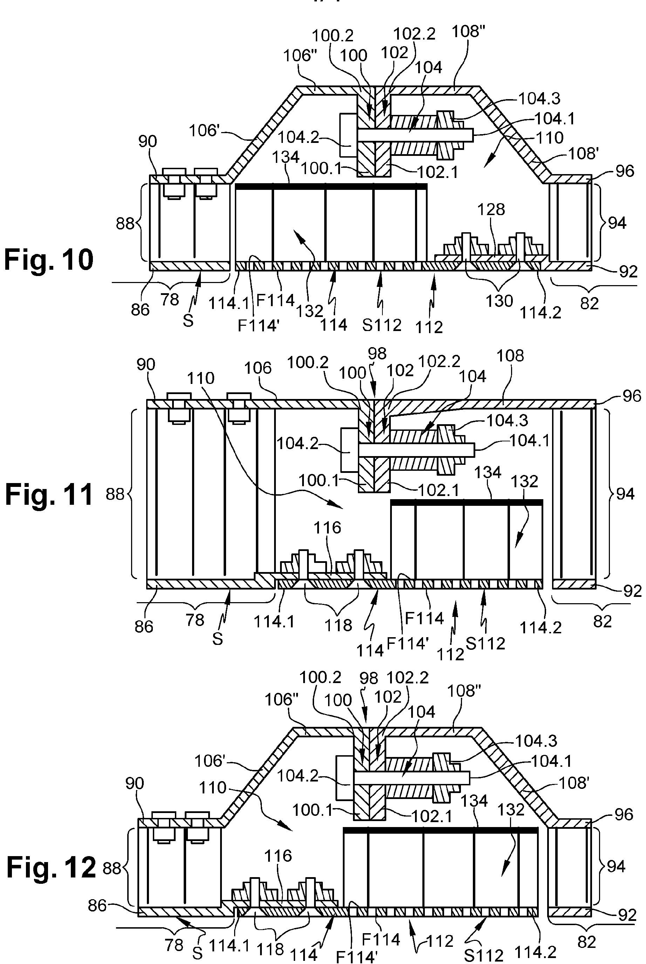

Selon des modes de réalisation visibles sur les figures 11 et 12, la couche acoustiquement résistive 86 du premier conduit 78 comprend une extension arrière 116 décalée par rapport à la surface aérodynamique S contre laquelle est plaquée la deuxième face F114' de la paroi 114 du bouchon 112, ladite paroi 114 étant fixée à ladite extension arrière 116 par des écrous à rivets et des vis 118 affleurants ou tout autre élément de liaison.

Selon un autre mode de réalisation visible sur la figure 7, la liaison 98 comprend une première attache 120 en Z qui présente une première aile 120.1 fixée à la couche réflectrice 90 du premier conduit 78 ainsi qu'une deuxième aile 120.2 décalée par rapport à la surface aérodynamique S contre laquelle est plaquée la deuxième face F114' de la paroi 114 du bouchon 112, ladite paroi 114 étant fixée à ladite deuxième aile 120.2 par des écrous à rivets et des vis 122 affleurants ou tout autre élément de liaison. En complément, la liaison 98 comprend une deuxième attache 124 en L qui présente une première aile 124.1 reliée à la première collerette 100 ainsi qu'une deuxième aile 124.2 décalée par rapport à la surface aérodynamique S contre laquelle est plaquée la deuxième face F114' de la paroi 114 du bouchon 112, ladite paroi 114 étant fixée à ladite deuxième aile 124.2 par des écrous à rivets et des vis 126 affleurants ou tout autre élément de liaison. Comme illustré sur la figure 7, la liaison 98 peut comprendre des premières et deuxièmes attaches 120, 124, uniquement des premières attaches 120 ou uniquement des deuxièmes attaches 124. En variante, la première attache 120 en Z pourrait être fixée à la deuxième couche réflectrice 96 du deuxième conduit 82 et/ou la deuxième attache 124 en L pourrait être reliée à la deuxième collerette 102.

Selon des modes de réalisation visibles sur les figures 6, 9, 10, le bouchon 112 est relié au deuxième conduit 82. Selon une configuration, la deuxième couche acoustiquement résistive 92 du deuxième conduit 82 comprend une extension avant 128 décalée par rapport à la surface aérodynamique S contre laquelle est plaquée la deuxième face F114' de la paroi 114 du bouchon 112, ladite paroi 114 étant fixée à ladite extension avant 128 par des écrous à rivets et des vis 130 affleurants ou tout autre élément de liaison.

Bien entendu, l'invention n'est pas limitée à ces modes de réalisation pour la liaison entre le bouchon 112 et le premier ou deuxième conduit 78, 82.

Selon différents modes de réalisation, le bouchon 112 comprend au moins une structure alvéolaire 132 rapportée contre la paroi 114, plus particulièrement contre la deuxième face F114' de la paroi 114. Cette structure alvéolaire 132 peut recouvrir toute la deuxième face F114', comme illustré sur la figure 7, ou uniquement les zones de la deuxième face F114' non recouvertes par les extensions avant ou arrière 116, 128, comme illustré sur les figures 6, 9 à 12.

Selon certains modes de réalisation, la paroi 114 est poreuse et acoustiquement résistive. Selon ces modes de réalisation, la paroi 114 est poreuse et acoustiquement résistive au moins au droit de la structure alvéolaire 132, cette dernière étant intercalée entre ladite paroi 114 acoustiquement poreuse et une couche réflectrice 134. Ainsi, la paroi 114 acoustiquement résistive, la structure alvéolaire 132 et la couche réflectrice 134 forment un panneau acoustique contribuant à l'atténuation des ondes sonores.

Bien entendu, l'invention n'est pas limitée aux modes de réalisation précédemment décrits pour le bouchon 112, celui-ci pouvant être composé d'une simple tôle métallique, d'une plaque fabriquée en matériau composite ou de tout autre matériau adapté. Selon ces derniers modes de réalisation, le bouchon 112 ne présente pas de caractéristiques acoustiques.

## Revendications

1. Nacelle d'aéronef comprenant des premier et deuxième conduits (78, 82) présentant des premier et deuxième axes parallèles à une direction longitudinale, le premier conduit (78) comportant, selon une direction radiale, au moins une première couche acoustiquement résistive (86), au moins une première structure alvéolaire (88) ainsi qu'une première couche réflectrice (90), le deuxième conduit (82) comportant, selon une direction radiale, au moins une deuxième couche acoustiquement résistive (92), au moins une deuxième structure alvéolaire (94) ainsi qu'une deuxième couche réflectrice (96), les premier et deuxième conduits (78, 82) présentant des surfaces aérodynamiques (S) et étant reliés par une liaison (98) qui comprend :
- une première collerette (100) positionnée dans un plan perpendiculaire à la direction longitudinale, présentant un premier bord libre (100.1) et un deuxième bord (100.2) relié à la première couche réflectrice (90) du premier conduit (78),
- une deuxième collerette (102) positionnée dans un plan perpendiculaire à la direction longitudinale, plaquée contre la première collerette (100), présentant un premier bord libre (102.1) et un deuxième bord (102.2) relié à la deuxième couche réflectrice (96) du deuxième conduit (82),
- des éléments de liaison (104) orientés parallèlement à la direction longitudinale, traversant les première et deuxième collerettes (100, 102) et les maintenant plaquées l'une contre l'autre,
**caractérisée en ce que**, pour chacun des premier et deuxième conduits (78, 82), le premier bord libre (100.1, 102.1) de la première ou deuxième collerette (100, 102) présente un diamètre inférieur à celui de son deuxième bord (100.2, 102.2), **en ce que** les premier et deuxième conduits (78, 82) sont configurés pour former au moins un logement (110) débouchant au niveau des surfaces aérodynamiques (S) et dans lequel sont positionnés les première et deuxième collerettes (100, 102) ainsi que les éléments de liaison (104) et **en ce que** la liaison (98) comprend au moins un bouchon (112) configuré pour obturer le logement (110), relié au premier ou deuxième conduit (78, 82) et présentant une surface (S112) affleurant les surfaces aérodynamiques (S) des premier et deuxième conduits (78, 82).

2. Nacelle d'aéronef selon la revendication 1, **caractérisée en ce que**, pour chacun des premier et deuxième conduits (78, 82), la première ou deuxième structure alvéolaire (88, 94) est espacée de la première ou deuxième collerette (100, 102).

3. Nacelle d'aéronef selon l'une des revendications précédentes, **caractérisée en ce que**, pour chacun des premier et deuxième conduits (78, 82), la première ou deuxième couche réflectrice (90, 96) comprend un premier ou deuxième prolongement (106, 108) cylindrique, orienté vers l'arrière ou vers l'avant, relié à la première ou deuxième collerette (100, 102).

4. Nacelle d'aéronef selon l'une des revendications 1 à 2, **caractérisée en ce que** la première couche réflectrice (90) comprend un premier prolongement orienté vers l'arrière, présentant un premier tronçon tronconique (106') s'évasant vers l'arrière, relié à la première couche réflectrice (90), ainsi qu'un deuxième tronçon cylindrique (106") reliant le premier tronçon tronconique (106') et la première collerette (100) et **en ce que** la deuxième couche réflectrice (96) comprend un deuxième prolongement orienté vers l'avant, présentant un premier tronçon tronconique (108') s'évasant vers l'avant, relié à la deuxième couche réflectrice (96), ainsi qu'un deuxième tronçon cylindrique (108") reliant le premier tronçon tronconique (108') et la deuxième collerette (102).

5. Nacelle d'aéronef selon l'une des revendications précédentes, **caractérisée en ce que** le bouchon (112) comprend une paroi (114) qui présente une première face (F114) affleurant les surfaces aérodynamiques (S), une deuxième face (F114') opposée à la première face (F114), un bord avant (114.1) faiblement espacé de la première couche acoustiquement résistive (86) du premier conduit (78) et/ou un bord arrière (114.2) faiblement espacé de la deuxième couche acoustiquement résistive (92) du deuxième conduit (82).

6. Nacelle d'aéronef selon la revendication précédente, **caractérisée en ce que** la première couche acoustiquement résistive (86) du premier conduit (78) comprend une extension arrière (116) décalée par rapport à la surface aérodynamique (S) du premier conduit (78) contre laquelle est plaquée et fixée la paroi (114) du bouchon (112).

7. Nacelle d'aéronef selon la revendication 5, **caractérisée en ce que** la deuxième couche acoustiquement résistive (92) du deuxième conduit (82) comprend une extension avant (128) décalée par rapport à la surface aérodynamique (S) du deuxième conduit (82) contre laquelle est plaquée et fixée la paroi (114) du bouchon (112).

8. Nacelle d'aéronef selon la revendication 5, **caractérisée en ce que** la liaison (98) comprend une première attache (120) en Z qui présente une première aile (120.1) fixée à la première ou deuxième couche réflectrice (90, 96) du premier ou deuxième conduit (78, 82) ainsi qu'une deuxième aile (120.2) décalée par rapport à la surface aérodynamique (S) du premier ou deuxième conduit (78, 82) contre laquelle est plaquée et fixée la paroi (114) du bouchon (112).

9. Nacelle d'aéronef selon la revendication 5 ou 8, **caractérisée en ce que** la liaison (98) comprend une deuxième attache (124) en L qui présente une première aile (124.1) reliée à la première ou deuxième collerette (100, 102) ainsi qu'une deuxième aile (124.2) décalée par rapport à la surface aérodynamique (S) du premier ou deuxième conduit (78, 82) contre laquelle est plaquée et fixée la paroi (114) du bouchon (112).

10. Nacelle d'aéronef selon l'une des revendications 5 à 9, **caractérisée en ce que** le bouchon (112) comprend une couche réflectrice (134 ainsi qu'au moins une structure alvéolaire (132) rapportée contre la deuxième face (F114') de la paroi (114) et intercalée entre ladite paroi (114) et une couche réflectrice (134), ladite paroi (114) étant poreuse et acoustiquement résistive au moins au droit de la structure alvéolaire (132).

11. Aéronef comprenant au moins une nacelle selon l'une des revendications précédentes.

## Patentansprüche

1. Luftfahrzeuggondel mit einem ersten und einem zweiten Durchgang (78, 82), die eine erste und eine zweite Achse parallel zu einer Längsrichtung aufweisen, wobei der erste Durchgang (78) in eine radiale Richtung wenigstens eine erste schalldämmende Schicht (86), wenigstens eine erste Wabenstruktur (88) sowie eine erste reflektierende Schicht (90) aufweist und der zweite Durchgang (82) in eine radiale Richtung wenigstens eine zweite schalldämmende Schicht (92), wenigstens eine zweite Wabenstruktur (94) sowie eine zweite reflektierende Schicht (96) aufweist, wobei der erste und der zweite Durchgang (78, 82) aerodynamische Oberflächen (S) aufweisen und durch eine Verbindung (98) verbunden sind, die aufweist:
- einen ersten Flansch (100), der in einer Ebene im rechten Winkel zur Längsrichtung angeordnet ist und einen ersten freien Rand (100.1) und einen zweiten Rand (100.2) aufweist, der mit der ersten reflektierenden Schicht (90) des ersten Durchgangs (78) verbunden ist,
- einen zweiten Flansch (102), der in einer Ebene im rechten Winkel zur Längsrichtung angeordnet ist, der gegen den ersten Flansch (100) angesetzt ist und der einen ersten freien Rand (102.1) und einen zweiten Rand (102.2) aufweist, der mit der zweiten reflektierenden Schicht (96) des zweiten Durchgangs (82) verbunden ist,
- Verbindungselemente (104), die parallel zur Längsrichtung ausgerichtet sind, die durch den ersten und den zweiten Flansch (100, 102) verlaufen und diese aneinander angesetzt halten,
**dadurch gekennzeichnet, dass** für jeden der ersten und zweiten Durchgänge (78, 82) der erste freie Rand (100.1, 102.1) des ersten oder zweiten Flansches (100, 102) einen Durchmesser aufweist, der kleiner ist als der seines zweiten Rands (100.2, 102. 2), dass der erste und der zweite Durchgang (78, 82) so eingerichtet sind, dass sie wenigstens eine Aufnahme (110) bilden, die sich zu den aerodynamischen Oberflächen (S) hin öffnet und in der der erste und der zweite Flansch (100, 102) sowie die Verbindungselemente (104) angeordnet sind, und dass die Verbindung (98) wenigstens einen Verschluss (112) aufweist, der so eingerichtet ist, dass er die Aufnahme (110) verschließt, der mit dem ersten oder zweiten Durchgang (78, 82) verbunden ist und der eine Oberfläche (S112) aufweist, die mit den aerodynamischen Oberflächen (S) des ersten und zweiten Durchgangs (78, 82) bündig ist.

2. Luftfahrzeuggondel nach Anspruch 1, **dadurch gekennzeichnet, dass** für jeden der ersten und zweiten Durchgänge (78, 82) die erste oder zweite Wabenstruktur (88, 94) von dem ersten oder zweiten Flansch (100, 102) beabstandet ist.

3. Luftfahrzeuggondel nach einem der vorhergehenden Ansprüche, **dadurch gekennzeichnet, dass** für jeden der ersten und zweiten Durchgänge (78, 82) die erste oder zweite reflektierende Schicht (90, 96) eine erste oder zweite zylindrische, nach hinten oder nach vorne gerichtete Verlängerung (106, 108) aufweist, die mit dem ersten oder zweiten Flansch (100, 102) verbunden ist.

4. Luftfahrzeuggondel nach einem der Ansprüche 1 bis 2, **dadurch gekennzeichnet, dass** die erste reflektierende Schicht (90) eine erste nach hinten gerichtete Verlängerung umfasst, die einen ersten kegelstumpfförmigen Abschnitt (106') aufweist, der sich nach hinten erweitert und der mit der ersten reflektierenden Schicht (90) verbunden ist, sowie einen zweiten zylindrischen Abschnitt (106") aufweist, der den ersten kegelstumpfförmigen Abschnitt (106') und den ersten Flansch (100) verbindet, und dass die zweite reflektierende Schicht (96) eine zweite nach vorne gerichtete Verlängerung aufweist, die einen ersten kegelstumpfförmigen Abschnitt (108'), der sich nach vorne erweitert und der mit der zweiten reflektierenden Schicht (96) verbunden ist, sowie einen zweiten zylindrischen Abschnitt (108") aufweist, der den ersten kegelstumpfförmigen Abschnitt (108') und den zweiten Flansch (102) verbindet.

5. Luftfahrzeuggondel nach einem der vorhergehenden Ansprüche, **dadurch gekennzeichnet, dass** der Verschluss (112) eine Wand (114) umfasst, die eine erste Seite (F114), die mit den aerodynamischen Oberflächen (S) bündig ist, eine zweite Seite (F114'), die der ersten Seite (F114) gegenüberliegt, einen vordere Rand (114.1), der von der ersten schalldämmenden Schicht (86) des ersten Durchgangs (78) gering beabstandet ist, und/oder einen hinteren Rand (114.2) aufweist, der von der zweiten schalldämmenden Schicht (92) des zweiten Durchgangs (82) gering beabstandet ist.

6. Luftfahrzeuggondel nach dem vorhergehenden Anspruch, **dadurch gekennzeichnet, dass** die erste schalldämmende Schicht (86) des ersten Durchgangs (78) eine hintere Verlängerung (116) umfasst, die in Bezug auf die aerodynamische Oberfläche (S) des ersten Durchgangs (78) versetzt ist und an der die Wand (114) des Verschlusses (112) angesetzt und befestigt ist.

7. Luftfahrzeuggondel nach Anspruch 5, **dadurch gekennzeichnet, dass** die zweite schalldämmende Schicht (92) des zweiten Durchgangs (82) eine vordere Verlängerung (128) umfasst, die in Bezug auf die aerodynamische Oberfläche (S) des zweiten Durchgangs (82) versetzt ist und an der die Wand (114) des Verschlusses (112) angesetzt und befestigt ist.

8. Luftfahrzeuggondel nach Anspruch 5, **dadurch gekennzeichnet, dass** die Verbindung (98) einen ersten Z-förmigen Halter (120) umfasst, der einen ersten Flügel (120.1) aufweist, der an der ersten oder zweiten reflektierenden Schicht (90, 96) des ersten oder zweiten Durchgangs (78, 82) befestigt ist, sowie einen zweiten Flügel (120.2) aufweist, der in Bezug auf die aerodynamische Oberfläche (S) des ersten oder zweiten Durchgangs (78, 82) versetzt ist und an den die Wand (114) des Verschlusses (112) angesetzt und befestigt ist.

9. Luftfahrzeuggondel nach Anspruch 5 oder 8, **dadurch gekennzeichnet, dass** die Verbindung (98) einen zweiten L-förmige Halter (124) umfasst, der einen ersten Flügel (124.1) aufweist, der mit dem ersten oder zweiten Flansch (100, 102) verbunden ist, sowie einen zweiten Flügel (124.2) aufweist, der in Bezug auf die aerodynamische Oberfläche (S) des ersten oder zweiten Durchgangs (78, 82) versetzt ist und an den die Wand (114) des Verschlusses (112) angesetzt und befestigt ist.

10. Luftfahrzeuggondel nach einem der Ansprüche 5 bis 9, **dadurch gekennzeichnet, dass** der Verschluss (112) eine reflektierende Schicht (134 sowie wenigstens eine Wabenstruktur (132) aufweist, die an der zweiten Seite (F114') der Wand (114) angebracht und zwischen der Wand (114) und einer reflektierenden Schicht (134) eingefügt ist, wobei die Wand (114) porös und zumindest im Bereich der Wabenstruktur (132) schalldämmend ist.

11. Luftfahrzeug mit wenigstens einer Gondel nach einem der vorhergehenden Ansprüche.

## Claims

1. Aircraft nacelle comprising first and second ducts (78, 82), having first and second axes parallel to a longitudinal direction, the first duct (78) comprising, in a radial direction, at least one first acoustically resistive layer (86), at least one first alveolar structure (88), as well as a first reflective layer (90), the second duct (82) comprising, in a radial direction, at least one second acoustically resistive layer (92), at least one second alveolar structure (94), as well as a second reflective layer (96), the first and second ducts (78, 82) having aerodynamic surfaces (S), and being connected by a connection (98) which comprises:
- a first flange (100) which is positioned on a plane perpendicular to the longitudinal direction, having a free first edge (100.1) and a second edge (100.2) which is connected to the first reflective layer (90) of the first duct (78);
- a second flange (102) which is positioned on a plane perpendicular to the longitudinal direction, placed against the first flange (100), having a free first edge (102.1) and a second edge (102.2) which is connected to the second reflective layer (96) of the second duct (82);
- connection elements (104) which are oriented parallel to the longitudinal direction, passing through the first and second flanges (100, 102), and maintaining them placed against one another,
**characterized in that**, for each of the first and second ducts (78, 82), the first free edge (100.1, 102.1) of the first or second flange (100, 102) has a diameter which is smaller than that of its second edge (100.2, 102.2), wherein the first and second ducts (78, 82) are configured to form at least one receptacle (110) opening at the aerodynamic surfaces (S), and in which the first and second flanges (100, 102) as well as the connection elements (104), are positioned, and wherein the connection (98) comprises at least one cap (112) which is configured to close the receptacle (110), which cap is connected to the first or second duct (78, 82), and has a surface (S112) flush with the aerodynamic surfaces (S) of the first and second ducts (78, 82).

2. Aircraft nacelle as claimed in claim 1, wherein, for each of the first and second ducts (78, 82), the first or second alveolar structure (88, 94) is spaced from the first or second flange (100, 102).

3. Aircraft nacelle as claimed in one of the preceding claims, wherein, for each of the first and second ducts (78, 82), the first or second reflective layer (90, 96) comprises a first or second cylindrical extension (106, 108), which is oriented towards the rear or towards the front, and is connected to the first or second flange (100, 102).

4. Aircraft nacelle as claimed in one of claims 1 to 2, wherein the first reflective layer (90) comprises a first extension oriented towards the rear, having a first frusto-conical section (106) which widens towards the rear, which section is connected to the first reflective layer (90), as well as a second frusto-conical section (106") which connects the first frusto-conical section (106') and the first flange (100), and wherein the second reflective layer (96) comprises a second extension oriented towards the front, having a first frusto-conical section (108') which widens towards the front, which section is connected to the second reflective layer (96), as well as a second cylindrical section (108") connecting the first frusto-conical section (108') and the second flange (102).

5. Aircraft nacelle as claimed in one of the preceding claims, wherein the cap (112) comprises a wall (114) which has a first face (F114) flush with the aerodynamic surfaces (S), a second face (F114') opposite the first face (F114), a front edge (114.1) which is slightly spaced from the first acoustically resistive layer (86) of the first duct (78), and/or a rear edge (114.2) which is slightly spaced from the second acoustically resistive layer (92) of the second duct (82).

6. Aircraft nacelle as claimed in the preceding claim, wherein the first acoustically resistive layer (86) of the first duct (78) comprises a rear extension (116) which is offset relative to the aerodynamic surface (S) of the first duct (78), against which the wall (114) of the cap (112) is placed and secured.

7. Aircraft nacelle as claimed in claim 5, wherein the second acoustically resistive layer (92) of the second duct (82) comprises a front extension (128) which is offset relative to the aerodynamic surface (S) of the second duct (82), against which the wall (114) of the cap (112) is placed and secured.

8. Aircraft nacelle as claimed in claim 5, wherein the connection (98) comprises a first fastener (120) in the form of a "Z", which has a first wing (120.1) secured on the first or second reflective layer (90, 96) of the first or second duct, (78, 82) as well as a second wing (120.2) which is offset relative to the aerodynamic surface (S) of the first or second duct (78, 82), against which the wall (114) of the cap (112) is placed and secured.

9. Aircraft nacelle as claimed in claim 5 or 8, wherein the connection (98) comprises a second fastener (124) in the form of an "L", which has a first wing (124.1) connected to the first or second flange (100, 102), as well as a second wing (124.2) which is offset relative to the aerodynamic surface (S) of the first or second duct (78, 82), against which the wall (114) of the cap (112) is placed and secured.

10. Aircraft nacelle as claimed in any one of claims 5 to 9, wherein the cap (112) comprises a reflective layer (134) and at least one alveolar structure (132) which is added on against the second face (F114') of the wall (114), and is interposed between said wall (114) and a reflective layer (134), said wall (114) being porous and acoustically resistive at least in line with the alveolar structure (132). 13

11. Aircraft comprising at least one nacelle as claimed in one of the preceding claims.
